Europäisches Patentamt

European Patent Office

Office européen des brevets

(11) Publication number: **0 100 632 B2**

(12) # NEW EUROPEAN PATENT SPECIFICATION

(45) Date of publication of the new patent specification : **06.11.91 Bulletin 91/45**

(51) Int. Cl.⁵ : **B60J 3/02**

(21) Application number : **83304246.8**

(22) Date of filing : **21.07.83**

(54) Vehicle visor.

(30) Priority : **30.07.82 US 403567**

(43) Date of publication of application : **15.02.84 Bulletin 84/07**

(45) Publication of the grant of the patent : **18.01.89 Bulletin 89/03**

(45) Mention of the opposition decision : **06.11.91 Bulletin 91/45**

(84) Designated Contracting States : **DE FR GB IT**

(56) References cited :
**DE-A- 2 235 774**
**DE-C- 512 854**
**DE-C- 1 140 475**

(56) References cited :
**FR-A- 976 832**
**FR-A- 1 295 506**
**FR-E- 73 125**
**US-A- 2 101 901**
**US-A- 2 289 644**
**US-A- 2 559 471**

(73) Proprietor : **PRINCE CORPORATION**
**Windcrest Drive**
**Holland Michigan 49423 (US)**

(72) Inventor : **Fleming, Dennis Joseph**
**617 State Street**
**Holland Michigan (US)**

(74) Representative : **Robinson, Anthony John Metcalf et al**
**Kilburn & Strode 30 John Street**
**London, WC1N 2DD (GB)**

EP 0 100 632 B2

## Description

The present invention relates to vehicle visors.

Conventional visors currently used in vehicles, such as automobiles, typically pivot vertically about a generally horizontal axis for movement from the raised stored position against the vehicle headliner to a lowered windshield position for use in blocking sunlight entering the vehicle from the front. Sliding visors of the type disclosed in US-A-2,289,644 and US-A-2,559,471 slide down from the headliner of a vehicle and are guided within an edge track. Operation of these visors can be extremely troublesome since frequently they will stick and be difficult to operate since they do not slide smoothly between a raised stored and a lowered use position. Similarly, the device of FR-A-976832 (which has those features set out in the preamble of Claim 1) has a tendency for the parallel arms to bend in use, possibly causing the visor to stick.

According to the present invention a visor control assembly for a vehicle of the type known from FR-A-976832 is characterised by the features set out in the characterising portion of Claim 1.

Preferably the visor assembly is produced as a module which can be snap-fitted to the vehicle roof and its control mechanism is recessed behind a decorative panel. The visor control assembly may be manually operated or may be coupled to one of the pivot points to electrically lower and raise the visor to any selected position.

Particular embodiments of the invention are set out in the dependent claims.

The invention may be put into practice in various ways and one visor assembly embodying the invention will now be described by way of example with both a manual and motorized drive for controlling the visor assembly with reference to the accompanying drawings, in which:

Figure 1 is a fragmentary perspective view of a vehicle embodying a visor assembly;

Figure 2 is an enlarged fragmentary and partially broken away perspective view of the visor assembly of Figure 1 shown with the visor in the lowered use position;

Figure 3 is a front elevational view of the visor control structure of the visor assembly shown in Figure 2 and shown in one end position;

Figure 4 is a front elevational view of the visor control shown in Figure 3 rotated to an intermediate position;

Figure 5 is a front elevational view of the visor control shown in Figure 3 rotated to a second end position;

Figure 6 is a top perspective view of the visor control shown in Figure 3 taken in a direction indicated by arrow VI in Figure 3;

Figure 7 is an enlarged, fragmentary and partly broken away front elevational view of the structure coupling the visor control to the visor;

Figure 8 is a fragmentary cross-sectional view of the structure shown in Figure 7 taken along section line VIII-VIII of Figure 7; and

Figure 9 is a cross-sectional, fragmentary top view of a motorized drive for the visor control shown in Figures 1 to 8.

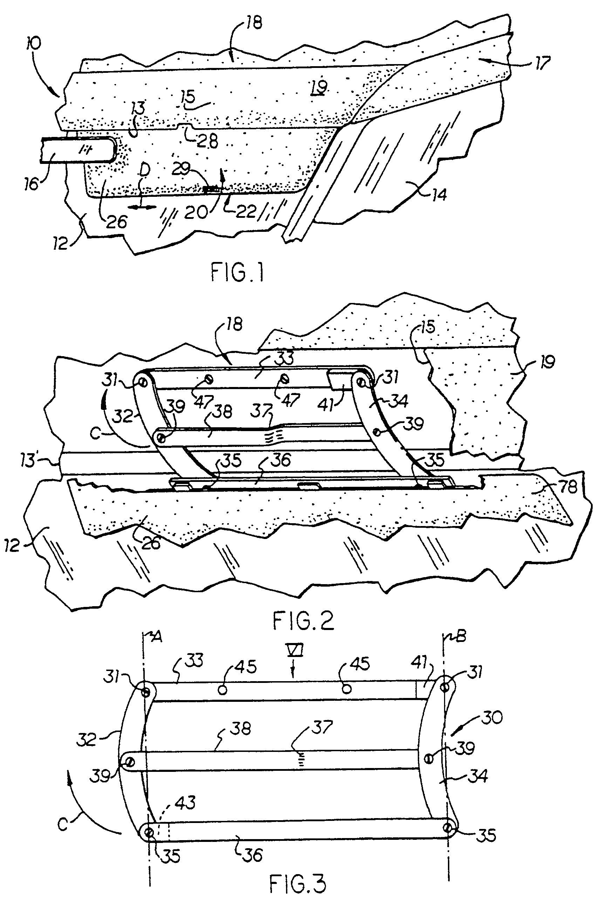

Referring initially to Figure 1, there is shown the right front interior of a vehicle 10 which includes a windshield 12, a right side front passenger side window 14 and a rear view mirror 16. Extending above the windshield is the ceiling or headliner area 18 of the vehicle which typically is upholstered with a fabric 19 conforming to the vehicle's general interior decor. The headliner frequently will include a snap-in upholstered panel conventionally secured to the sheet metal roof of the vehicle by means of conventional mounting structure adapted to receive snap fasteners, screws or the like. Extending along the lower edge of the headliner, just above the passenger window 14, is an integral side window visor assembly 17.

If Figure 1, the front right side visor assembly 20 is shown in its lowered use position extended from an opening 13 between the windshiled frame 13' (figure 2) and an upholstered cover panel 15 for the visor assembly 20. The panel 15 extends just above the windshield 12 and across the top thereof to provide a decorative cover for substantially identical left and right visor assemblies, with only the right visor assembly 20 being illustrated. The construction and operation of the visor assembly 20 is now described in connection with Figures 2 to 8.

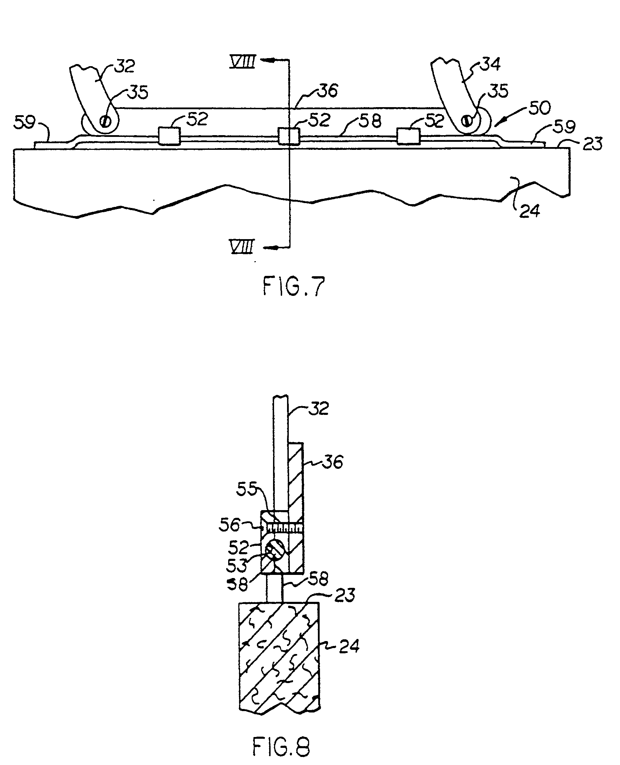

The visor assembly 20 comprises three elements including the sun screening panel 22 made of a visor body 24 (Figure 8) covered by suitable upholstery material 26 corresponding in appearance to the vehicle's upholstery 19; a visor control 30, shown in detail in Figures 3 to 6; and a pivot coupling mechanism 50 extending between visor control 30 and visor body 24 and best seen in Figures 2, 7 and 8. The body 24 also can be made of an opaque or transparent smoked material. The visor control 30 permits the visor panel 22 to translate in a plane generally aligned with the windshield from a lowered position, shown in Figure 1, upwardly, as illustrated in Figures 2, 3, 4 and 5, to a concealed position within the vehicle headliner behind the upholstered cover panel 15. The pivot mechanism 50 couples the top edge of the visor body to the control 30 permitting the visor panel 22, once the visor has been withdrawn from a stored position, to pivot forwardly along a generally horizontal axis against the windshield 12 or rearwardly to a vertical position or further, if desired. The construction of the visor control 30 is now described specifically with reference to Figures 2 to 6.

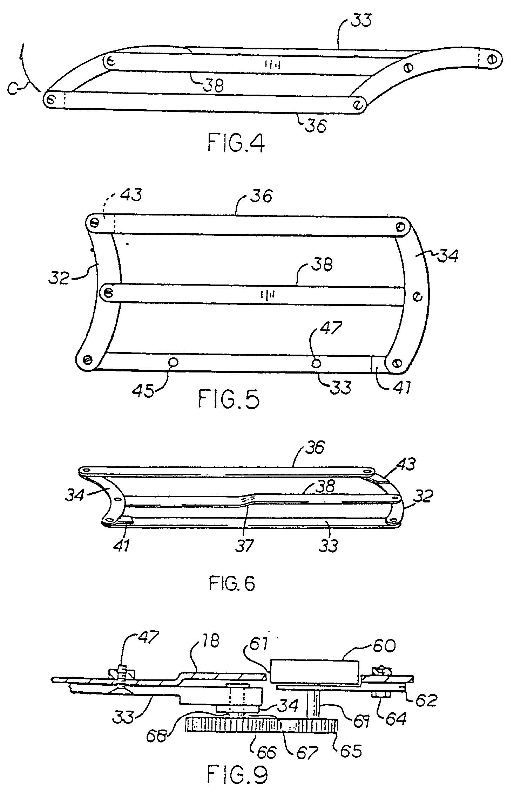

The visor control 30 includes a pair of spaced arcuate shaped, substantially parallel arms 32 and 34 with first or upper ends pivotally coupled to a fixed support arm 33 by means of pivot couplings 31. The opposite end of the arms 32 and 34 are coupled to a visor mounting lower arm 36 by pivot couplings 35. The pivot couplings 31 and 35 can be rivets, bolts or the like fitted through apertures in teh arms with sufficient clearance to allow relative pivoting movement of the arms at the interconnecting points. A cross arm 38, having an offset 37 therein to provide clearance, as described in detail below, extends between the arms 32 and 34 approximately mid-way along the arms and is pivotally coupled at its opposite ends to the arms by means of pivot couplings 39 which are of the same construction as the pivot couplings 31 and 35. The location of the pivot coupling 39 is offset from a line intersecting the couplings 31 and 35, as illustrated by lines A and B in Figure 3, which illustrates that the pivot coupling 39 does not fall in line with the pivot couplings 31 and 35. A first spacer 41 is positioned between the fixed support arm 33 and one end of the arm 34 at the pivot coupling 31, as seen in Figures 3 and 6, while a second spacer 43 extends between the visor mounting lower arm 36 and the other end of the arm 32 at the pivot coupling 35, as also shown in these Figures.

The visor control includes a pivoted interconnection of five arms (32, 33, 34, 36, 38) with a cross arm (38) extending intermediate the parallel side arms (32, 34). The three pivot points for each of the parallel arms 32, 34 are offset such that a straight line extending between any two pivot points for each arm will not intersect the third. This construction provides stability for the visor control as it is rotated from the visor lowered position, shown in Figures 1, 2 and 3, clockwise, as shown by arrow C in the Figures, to an intermediate position, shown in Figure 4, and ultimately to a visor elevated and stored position, shown in Figure 5. The spacers 41 and 43, as well as the offset or bend 37, permit the cross arm 38 to clear and pass over the fixed support arm 33 as well as allow the visor mounting lower arm 36 to clear and pass over the cross arm 38 as the control moves from the intermediate position shown in Figure 4 to the elevated position shown in Figure 5.

The fixed support arm 33 includes at least a pair of spaced apertures 45 to permit the assembly to be secured to the headliner of a vehicle by fastening screws 47 (Figure 2). Although in the preferred embodiment, the fixed support arm 33 is secured to the sheet of metal of headliner 18 it is possible, in some embodiments, to employ the headliner itself as the stationary member and secure the pivot couplings 31 of the arms 32 and 34 directly to the headliner in a pivotal fashion such that the arms 32 and 34 will pivot directly on the headliner as opposed to on the fixed support arm 33. Similarly, although the visor mounting lower arm 36 is provided and pivotally coupled at opposite ends to the arms 32 and 34, this arm likewise can be integrally included in the visor body such that the opposite ends of the arms 32 and 34 can be pivotally coupled directly to the visor body. It is desirable, however, that the cross arm 38 which is provided pivots on an axis offset from the other pivot axes such that a straight line drawn through any two pivot connections will not intersect the third. This provides a stable configuration such that as the visor control passes through a position approximately 20° rotated clockwise from that shown in Figure 3 it will be permitted only to continue rotating in a clockwise direction in a stable fashion to the visor stored position shown in Figure 5.

A pivot coupling mechanism or adjustment structure 50, shown in Figures 7 and 8, is provided to couple the visor body 24 of the visor panel 22 to the control 30 to permit fore and aft adjustment of the visor panel 22 once lowered into a use position (Figure 1). The visor body 24 can be made of a suitable material such as a compressed fibre, a moulded polymeric material such as polyvinyl chloride or the like. Coupled to the top edge 23 of the visor body 24 is an elongated rod 58 having a shallow U-shaped configuration with end tabs 59 secured to the surface 23 of the visor body 24 by suitable fastening means. The elevated central portion of the rod 58 is spaced from the surface, as best seen in Figure 7, and is pivotally coupled to a plurality of spaced blocks 52 having apertures 53 (Figure 8) extending therethrough for pivotally holding the rod 58 within the blocks. The blocks 52 in turn are secured to the visor mounting lower arm 36 by suitable fastening means such as recessed screws 56 (Figure 8). The blocks 52 can be split, as shown by mating surfaces 55 (Figure 8), for assembly onto the rod 58. To provide a neat appearance to the visor assembly 20, the padded upholstery material 26 for the visor extends upwardly and over the ajustment mechanism 50 and the lower arm 36 by a flap 78 (Figure 2) which covers this mechanism and which is free to flex as the visor is pivoted along the general horizontal axis of the rod 58 for adjustment of the visor.

In operation, the visor, as shown in Figure 1, has been manually lowered to its use position and can be pivoted forwardly against the windshield 12 or rearwardly to a vertical or even beyond the vertical position to provide some fore and aft pivoted adjustment of the visor. Similarly, with the control assembly 30, the visor can move laterally in a direction indicated by arrow D in Figure 1 to cover the upper right corner of the windshield, as illustrated in Figure 1, or move to the left somewhat to cover more fully behind the rear view mirror without substantially elevating the visor within and behind the cover panel 15. To store the visor in a concealed, raised position behind the cover panel 15, the visor body is aligned with the panel by rotating it to be substantially co-planar with the arms of the control mechanism 30 and pushed upwardly and to the left to rotate the visor control in a clockwise direction indicated by arrow C in the Figures through the position shown in Figure 4 and to the stored position shown in Figure 5 in which the visor is fully retracted behind the panel 15. The panel 15 includes a notch 28 along its lower edge, and the lower lip of the visor panel 22 includes a small handle 29 to facilitate lowering and raising of the visor between the extended and retracted positions.

A motorized drive to electrically raise and lower the visor is shown in Figure 9 in which an electrical motor 60 is mounted within an aperture 61 formed in the sheet metal headliner 18 of the vehicle. The motor 60 is fixedly secured thereto by means of a mounting plate 62 secured to the headliner by means of one or more bolts 64. A motor output shaft 69 is secured to a first, relatively small diameter drive gear 65 which meshes with a second gear 66 secured to a pivot axle 68 which, in the preferred embodiment, is the pivot coupling 31 associated with the arm 34. In this embodiment, the motor 60 is fitted in the upper righthand corner of the structure, as shown in Figure 2, such that this pivot point is driven. The pivot axle or shaft 68 is secured to the arm 34 by means of welding indicated at 67 but is free to pivot within the fixed support arm 33 in turn secured to the headliner 18 by fastening screws 47. The motor 60 is a reversible DC pancake-type motor having a relatively thin cross section, as illustrated in Figure 9, and is coupled to the vehicle's power supply system by a spring loaded centre-off reversible single poll double throw switch (not shown) similar to that employed for automobile power windows such that the motor can be driven in opposite directions to rotate the visor control mechanism 30 between the raised visor stored position behind the panel 15 and a lowered position illustrated in Figure 1. Suitable limit switches can be provided in series with this electrical connection as required to automatically deactivate the motor when its limit has been reached.

## Claims

1. A visor control assembly (30) for a vehicle (10), comprising: a pair of substantially parallel arms (32, 34) spaced from one another; means (35) for pivotally coupling one end of each arm to a visor body (24) at spaced locations thereof; means (31) for pivotally coupling the opposite end of each parallel arm to a vehicle to permit movement of the visor body on the arms between a raised stored position and a lowered use position; characterised by a rigid cross arm (38) extending between the parallel arms (32, 34) and having opposite ends coupled by pivot coupling means (39) to the parallel arms.

2. A visor control assembly as claimed in Claim 1 in which the pivot coupling means (39) of each end of the cross arm (38) is offset from a straight line drawn through the respective pivot coupling means (31, 35) of each parallel arm to the visor body (24) and vehicle (10).

3. A visor control assembly as claimed in Claim 1 or 2 in which the means 135) for pivotally coupling each of the parallel arms (32, 34) to the visor body (24) comprises a lower arm (36) extending between and pivotally coupled to the parallel arms at the respective said one ends.

4. A visor control assembly as claimed in any of the preceding claims in which the means 135) for pivotally coupling each of the parallel arms (32, 34) to the visor body (24) includes a pivot rod (58) fixedly mounted to one of the visor body (24) or lower arm (36) and extending generally parallel to the plane of the visor body, and means (52) mounted to the other of the visor body (24) or lower arm (36) for pivotally supporting the pivot rod (58) to permit the visor to move in fore and aft directions in a vehicle.

5. A visor control assembly as claimed in any one of the preceding claims in which there is a support arm (33) to which the opposite ends of the parallel arms (32, 34) are pivotally secured.

6. A visor control assembly as claimed in claim 5 including a cover panel (15) positioned to cover the support arm (33) and visor body when in the raised position, and permitting the visor body to extend therethrough for movement to the lowered use position.

7. A visor control assembly as claimed in any one of the preceding claims in which each parallel arm (32, 34) is arcuate to provide offset pivotal coupling of the cross arm (38) to the parallel arms.

8. A visor control assembly as claimed in any one of the preceding claims when dependent upon claim 3 in which the cross arm (38) is generally parallel to the lower arm (36).

9. A visor control assembly as claimed in any one of the preceding claims including adjustment means (50) coupled to the visor body (24) to permit the visor body to be moved in fore and aft directions when in the lowered use position.

## Patentansprüche

1. Blendschutzsteueranordnung (30) für ein Fahrzeug, mit: Zwei im wesentlichen parallelen, im Abstand voneinander angeordneten Armen (32, 34); einer Vorrichtung (35) zum schwenkbaren Koppeln eines Endes jedes Armes mit einem Blendschutzkörper (24) an beabstandeten Stellen desselben; einer Vorrichtung (31) zum schwenkbaren Koppeln der entgegengesetzten Enden jedes der parallelen Arme mit einem Fahrzeug um eine Bewegung des Blendschutzkörpers an den Armen zwischen einer angehobenen Ruhestellung und einer abgesenkten Gebrauchsstellung zu gestatten, gekennzeichnet durch einen starren Querarm (38), der sich zwischen den parallelen Armen (32, 34) erstreckt und entgegengesetzte Enden, die durch einen Schwenkkopplungsvorrichtung (39) mit den parallelen Armen gekoppelt sind, hat.

2. Blendschutzsteueranordnung nach Anspruch 1, bei der die Schwenkkopplungsvorrichtung (39) jedes Endes des Querarms (38) von einer geraden Linie, die durch die Schwenkkopplungsvorrichtungen (31, 35) zwischen jedem parallelen Arm und dem Blendschutzkörper (24) bzw. dem Fahrzeug (10) geht, versetzt ist.

3. Blendschutzsteueranordnung nach Anspruch 1 oder 2, bei der die Vorrichtung (35) zum schwenkbaren Koppeln jedes der parallelen Arme (32, 34) mit dem Blendschutzkörper (24) einen unteren Arm (36) enthält, der sich zwischen den paralleln Armen an den jeweiligen einen Enden erstreckt und schwenkbar mit diesen gekoppelt ist.

4. Blendschutzsteueranordnung nach einem der vorhergehenden Ansprüche, dadurch gekennzeichnet daß die Vorrichtung (35) zum schwenkbaren Koppeln jedes der parallelen Arme (32, 34) mit dem Blendschutzkörper (24) eine Schwenkstange (58), die am Blendschutzkörper (24) oder am unteren Arm (36) fest angebracht ist und im wesentlichen parallel zur Ebene des Blendschutzkörpers (24) verläuft, und eine am unteren Arm (36) bzw. dem Blendschutzkörper (24) angebrachte Vorrichtung (52) zum schwenkbaren Haltern der Schwenkstange (58) enthält, um es dem Blendschutz zu ermöglichen, sich in Richtung nach vorne und nach hinten in einem Fahrzeug zu bewegen.

5. Blendschutzsteueranordnung nach einem der vorhergehenden Ansprüche, bei der ein Halterungsarm (33) vorgesehen ist, an dem die entgegengesetzten Enden der parallelen Arme (32, 34) schwenkbar angebracht sind.

6. Blendschutzsteueranordnung nach Anspruch 5, mit einem Abdeckpaneel (15), das zur Abdekkung des Halterungsarmes (33) und des Blendschutzkörpers in deren angehobenen Stellung angeordnet ist und es dem Blendschutzkörper gestattet, zur Bewegung in die abgesenkte Gebrauchsstellung hindurch zu erstrecken.

7. Blendschutzsteueranordnung nach einem der vorhergehenden Ansprüche in der jeder parallele Arm (32, 34) gebogen ist, um eine versetzte Schwenkkopplung des Querarmes (38) mit den parallelen Armen vorzusehen.

8. Blendschutzsteueranordnung nach einem der vorhergehenden Ansprüche, soweit sie vom Anspruch 3 abhängen, bei der der Querarm (38) im wesentlichen parallel zum unteren Arm (36) ist.

9. Blendschutzsteueranordnung nach einem der vorhergehenden Ansprüche mit einer mit dem Blendschutzkörper (24) gekoppelten Justiervorrichtung (50), die eine Bewegung des Blendschutzkörpers in Richtung nach vorne und hinten ermöglicht, wenn sich dieser in der abgesenkten Gebrauchsstellung befindet.

## Revendications

1. Ensemble (30) de commande de pare-soleil pour un véhicule (10) comportant: une paire de bras (32, 34), sensiblement parallèles, espacés l'un de l'autre, des moyens (35) pour relier, avec possibilité de pivotement, une première extrémité de chaque bras à un corps (24) de pare-soleil en des emplacement espacés de ce corps, des moyens (31) pour relier, avec possibilité de pivotement, l'extrémité opposée de chaque bras parallèle à un véhicule pour permettre le mouvement du corps du pare-soleil sur les bras entre une position haute de rangement et une position basse de service caractérisé par un bras intermédiaire (38) rigide qui s'étend entre les bras parallèles (32, 34) et a ses extrémités opposées reliées, par des moyens (39) de liaison, avec possibilité de pivotement, aux bras parallèles.

2. Ensemble de commande de pare-soleil selon la revendication 1, dans lequel les moyens (39) de liaison, avec possiblité de pivotement, de chaque extrémité du bras intermédiaire (38) sont déportés par rapport à une droite passant par les moyens respectifs (31, 35) de liaison, avec possibilité de pivotement, de chaque bras parallèle avec le corps (24) du pare-soleil et avec le véhicule (10).

3. Ensemble de commande de pare-soleil selon la revendication 1 ou 2, dans lequel les moyens (35) prévus pour relier, avec possibilité de pivotement, chacun des bras parallèles (32, 34) au corps (24) du pare-soleil comportent un bras inférieur (36) qui s'étend entre les bras parallèles et qui est relié, avec possibilité de pivotement, à ces bras parallèles, à leurs dites premières extrémités respectives.

4. Ensemble de commande de pare-soleil selon l'une quelconque des revendications précédentes, dans lequel les moyens (35) prévus pour relier, avec possibilité de pivotement, chacun des bras parallèles (32, 34) au corps (24) du pare-soleil comportent une tige pivot (58) montée de façon fixe sur l'un des composants constitués respectivement par le corps (24) du pare-soleil et le bras inférieur (36), et s'étendant de façon générale parallèlement au plan du corps du pare-soleil, ainsi que des moyens (52) montés sur l'autre des composants constitués respectivement par le corps (24) du pare-soleil et le bras inférieur (36), pour supporter, avec possibilité de pivotement, la tige pivot (58) pour permettre de déplacer le pare-soleil vers l'avant et vers l'arrière dans un véhicule.

5. Ensemble de commande de pare-soleil selon l'une quelconque des revendications précédentes, dans lequel il existe un bras support (33) auquel les extrémités opposées des bras parallèles (32, 34) sont accrochées, avec possibilité de pivotement.

6. Ensemble de commande de pare-soleil selon la revendication 5, comportant un panneau de recouvrement (15) placé pour recouvrir le bras support (33) et le corps du pare-soleil lorsqu'il est en position haute et permettant au corps du pare-soleil de d'étendre à travers lui pour lui permettre de se déplacer jusqu'à la position basse de service.

7. Ensemble de commande de pare-soleil selon l'une quelconque des revendications précédentes, dans lequel chaque bras parallèle (32, 34) est en arc pour assurer une liaison pivotante déportée du bras intermédiaire (38) par rapport aux bras parallèles.

8. Ensemble de commande de pare-soleil selon l'une quelconque des revendications précédentes, lorsqu'elle dépend de la revendication 3, dans lequel le bras intermédiaire (38) est de façon générale parallèle au bras inférieur (36).

9. Ensemble de commande de pare-soleil selon l'une quelconque des revendications précédentes comportant des moyens (50) de réglage couplés au corps (24) du pare-soleil pour permettre au corps de pare-soleil d'être déplacé vers l'avant et vers l'arrière lorsqu'il se trouve en position basse de service.

FIG.1

FIG.2

FIG.3

FIG.4

FIG.5

FIG.6

FIG.9

FIG.7

FIG.8